# FASCICULE DE BREVET EUROPEEN

(11) **EP 1 152 229 B1**
(45) Date de publication et mention de la délivrance du brevet: **03.07.2002**
(21) Numéro de dépôt: 01400937.7
(22) Date de dépôt: 12.04.2001
(51) Int. Cl.: G01H 1/00

(54) **Procédé de mesure sans contact des vibrations d'un corps tournant**
Verfahren zur berührungslosen Vibrationsmessung eines rotierenden Körpers
Method for contactless measurement of the vibrations of a rotating body

(30) Priorité: 13.04.2000 FR 0004768
(43) Date de publication de la demande: 07.11.2001
(73) Titulaire: SNECMA MOTEURS, 75015 Paris (FR)
(72) Inventeur: Beausseroy, Pierre Jean Emile, 1000 Troyes (FR); Eyraud, Jean-Louis, 77950 Maincy (FR); Lengelle, Régis Léo Marie Jean, 10440 Torvilliers (FR)

(56) Documents cités:
- US-A- 4 573 358

## Description

Le sujet de l'invention est la mesure des vibrations asynchrones de corps tournants tels que des aubes de turbomachine au moyen de détecteurs placés sur un carter environnant ou un autre poste fixe. Ces mesures sont réalisées par prélèvement puisque les détecteurs ne peuvent les effectuer que quand les corps tournants passent devant eux et sont aussi appelées non intrusives puisqu'elles s'effectuent à distance, sans contact matériel avec leur objet. Les capteurs employés peuvent être optiques, inductifs ou capacitifs. La mise en oeuvre est beaucoup plus facile que de coller des jauges de contrainte sur les corps tournants pour mesurer directement leur déformation, ce qui implique l'emploi de moyens de transmission tournants ou de télémétrie compliqués et coûteux. Les capteurs immobiles sont aussi susceptibles de fournir de meilleures informations que des moyens équivalents tournants, soumis à des conditions difficiles et bruités en conséquence.

Un exemple de réalisation de telles mesures est donné par US-A 4 573 358 qui prévoit de disposer des détecteurs régulièrement espacés angulairement autour d'une roue de turbine et de générer des signaux et de les traiter en sélectionnant une aube particulièrement.

L'utilisation de capteurs immobiles comporte pourtant l'inconvénient de ne permettre de mesurer l'amplitude des vibrations qu'au passage du corps vibrant, ce qui tronque les mesures de fréquences propres. Il faut en effet qu'un phénomène vibratoire périodique soit mesuré aux moins deux fois par sa période la plus élevée pour être évalué sans ambiguïté, alors que les oscillations de plus haute fréquence subissent des repliements qui font apparaître des fréquences surnuméraires, sans réalité physique, dans les résultats des mesures.

On est donc amené à rechercher un élargissement de la bande de fréquences qu'on peut détecter sans ambiguïté, afin de réduire le nombre de composantes fréquentielles propres situées au-dessus et sujettes au repliement. Cela peut être accompli en diminuant les durées entre les mesures, soit en accélérant la rotation du corps tournant, soit en accroissant le nombre de capteurs affectés à la mesure et situés sur une même circonférence pour que le corps vibrant passe successivement devant eux. La première solution n'est pas toujours praticable et la seconde a des limites dues au nombre de capteurs à installer. C'est pourquoi un perfectionnement du principe des mesures non intrusives de vibrations de corps tournants est proposé afin de distinguer sans effort les fréquences réelles de vibration des corps tournant des fréquences fictives, obtenues par le repliement de composantes fréquentielles propres supérieures à une limite de détection sans ambiguïté, et d'écarter ces fréquences fictives des résultats. L'intérêt du perfectionnement est de limiter le nombre de capteurs.

Dans le perfectionnement proposé comme l'invention, les détecteurs sont disposés régulièrement angulairement dans chaque réseau, en plusieurs réseaux ayant des nombres différents de détecteurs, tous les détecteurs d'un réseau n'appartenant pas à un autre réseau ayant un nombre supérieur de détecteurs, un spectre de fréquences mesurées est obtenu pour chacun des réseaux, et des comparaisons des spectres des réseaux sont faites pour sélectionner des raies des spectres et considérer comme fréquences de vibration qu'on recherche les fréquences des raies sélectionnées. Cette combinaison d'une nouvelle disposition des détecteurs et d'un traitement approprié de leurs résultats permet de reculer fortement la limite supérieure de la bande de détection sans ambiguïté des fréquences sans demander d'accroissement très important du nombre de capteurs.

Le traitement des résultats pourra comporter plusieurs phases selon la situation concrète à traiter.

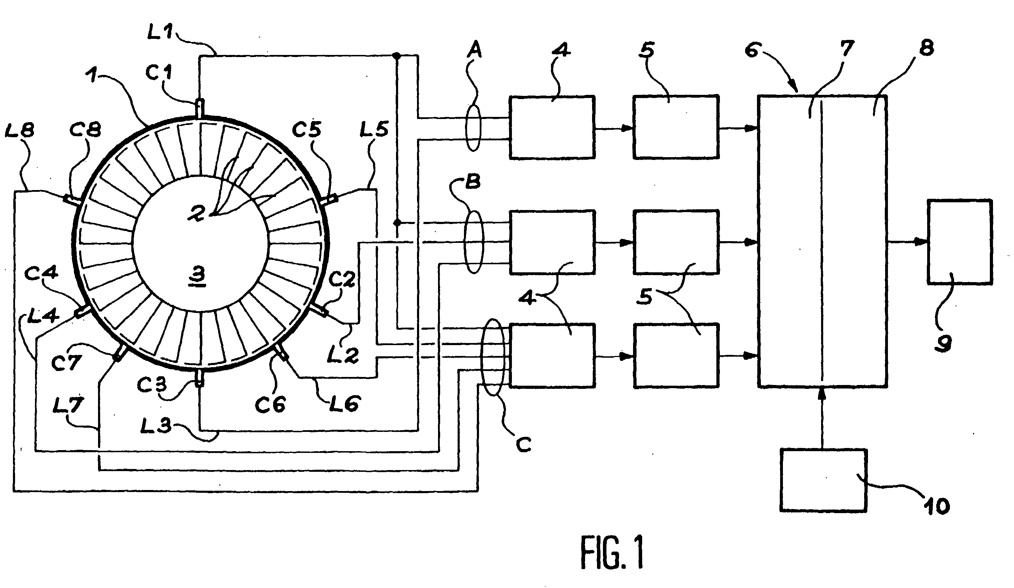

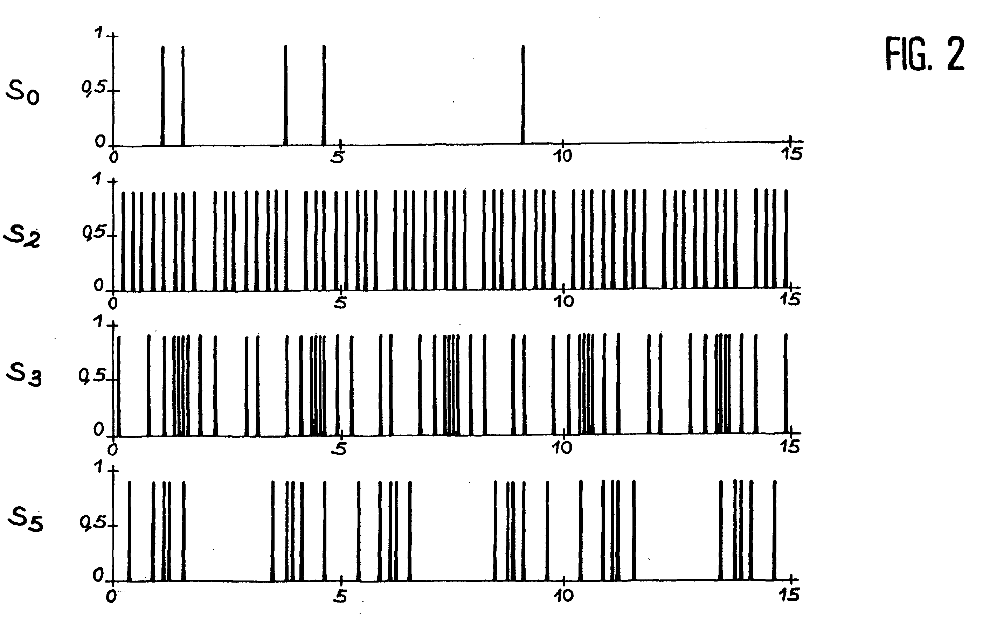

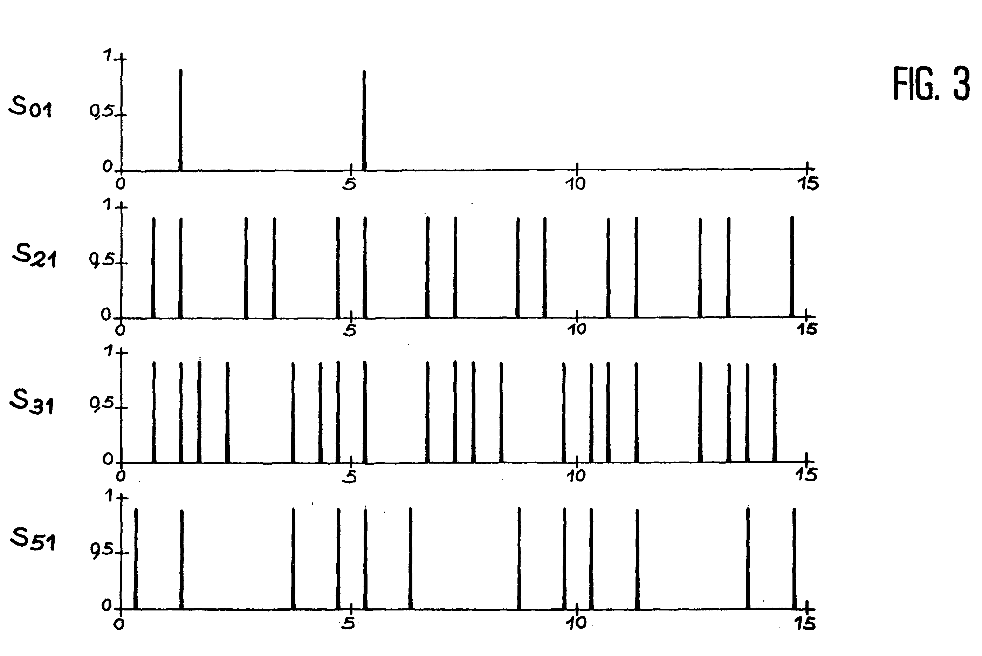

Ces aspects principaux de l'invention, ainsi que d'autres, seront mis en lumière au moyen de la description détaillée qui suit :
■ la figure 1 représente une réalisation matérielle de l'invention,
■ et les figures 2 et 3 sont des groupes de spectres fréquentiels exploités pour déterminer les fréquences propres d'un système vibrant.

La figure 1 représente un carter 1 circulaire vu en coupe transversale et sur lequel on a collé huit capteurs, notés C1 à C8, qui enregistrent les vibrations d'aubes 2 montées sur un rotor 3 en rotation dans le carter 1. Les capteurs C1 à C8 sont répartis en trois réseaux A, B et C, l'un comprenant les capteurs C1 et C3 diamétralement opposés, un autre les capteurs C1, C2 et C4 espacés de 120° chacun et le troisième les capteurs C1, C5, C6, C7 et C8 espacés de 72° chacun. D'une façon générale, les capteurs des réseaux de l'invention sont en nombres premiers entre eux mais les réseaux comprennent avantageusement un capteur commun ; le nombre de réseaux est quelconque et donne des résultats d'autant meilleurs qu'il est élevé. On peut en effet démontrer que, si la limite supérieure Fₓ de la bande de détection sans ambiguïté des fréquences des aubes 2 est égale à (Fr.N)/2 quand il n'existe qu'un réseau de capteurs, où Fr est la fréquence de rotation du rotor 3 et N le nombre total de capteurs du réseau, elle est égale ici, si les nombres de capteurs sont premiers entre eux, à Fr. (ΠNi)/2, où Π désigne l'opération de produit et Ni le nombre de capteurs de chacun des réseaux A, B et C. Dans le cas présent, Fₓ=15Fr, au lieu de 4 Fr si les huit capteurs C1 à C8 avaient appartenu à un réseau unique ; si on avait utilisé dix capteurs entre trois réseaux de trois, quatre et cinq capteurs, on aurait obtenu Fₓ=30Fr, au lieu de 5Fr avec dix capteurs appartenant à un réseau commun. L'accroissement de la bande de fréquences sans ambiguïté est donc rapide en fonction du nombre des capteurs et des réseaux.

Revenant à la figure 1, on voit que des lignes de sortie L1 à L8 des capteurs C1 à C8 sont regroupées pour chacun des réseaux A, B et C en faisceaux aboutissant à des dispositifs échantillonneurs 4 qui évaluent, d'après la vitesse de rotation Fr du rotor 3, les instants où chacun dès capteurs C1 à C8 mesure les vibrations produites par une même aube 2. Des analyseurs de spectre 5 peuvent alors produire, pour chacune des aubes 2 et chacun des réseaux de capteurs, un spectre des fréquences évaluées en recourant à une transformation de Fourier ou un procédé équivalent. Un dispositif de traitement 6 est enfin utilisé pour distinguer les fréquences vibratoires des aubes 2 par l'étude des spectres des réseaux A, B et C. Il forme un élément important de l'invention et sera donc décrit en détail.

Il comprend quatre blocs 7, 8, 9 et 10 différents de traitement qui effectuent certaines opérations de comparaison sur les spectres. Celles-ci seront explicitées à l'aide d'abord de la figure 2, où on suppose que les fréquences propres d'une aube 2 sont 1,10 hertz, 1,55 hertz, 3,78 hertz, 4,63 hertz et 9,15 hertz et ont la même amplitude. La piste supérieure de la figure 2 est le spectre So qu'on doit obtenir (en l'absence de repliement de fréquences), et les pistes suivantes sont les spectres S2, S3 et S5 qu'on obtient avec les trois réseaux de A, B et C de 2, 3 et 5 capteurs.

Le premier bloc 7 effectue l'intersection des spectres S2, S3 et S5, c'est-à-dire qu'il indique les raies qui leur sont communes. Il s'agit ici uniquement des cinq raies des fréquences propres, si bien que le premier bloc 7 peut souvent suffire pour accomplir seul le traitement souhaité ; mais certains cas exigent des traitements plus compliqués.

En général, les spectres comportent des raies de repliement aux fréquences f=±fₐ+k.N.Fr (formule 1), où fₐ est la fréquence propre à trouver, k est un entier positif ou négatif, N le nombre de capteurs du réseau et Fr est comme précédemment la fréquence de rotation du rotor 3. Le deuxième bloc 8 compte le nombre de raies obtenues dans le spectre d'intersection dans la bande limitée par la fréquence [ppcm (Ni)]Fr/2 (formule 2) où PPCM (Ni) est le plus petit commun multiple des nombres des capteurs des réseaux A, B et C, c'est-à-dire ici (2x3x5)/2=15 Hz si Fr=1 Hz. Si ce nombre de raies communes à tous les spectres est différent du nombre de raies présentes dans la bande de détection sans ambiguïté d'au moins un des réseaux A, B et C, limitée par la fréquence Fx calculée comme on l'a vu et égale ici un 1 Hz, 1,5 Hz et 2,5 Hz respectivement, le deuxième bloc 8 calcule les sous-ensembles de fréquences du spectre d'intersection qui sont susceptibles d'expliquer à eux seuls l'existence des raies dans tous les spectres expérimentaux ; les autres fréquences du spectre d'intersection déterminé par le premier bloc 7 peuvent être tenues pour inutiles et écartées.

Un exemple apparaît à la figure 3, où les spectres S01, S21, S31 et S51 ont les mêmes significations que les spectres S0, S2, S3 et S5 précédant mais où les fréquences propres à détecter sont ici 1,3 et 5,3 Hz. L'intersection des spectres S21, S31 et S51 est alors composée des fréquences à 1,3 Hz, 4,7 Hz, 5,3 Hz et 11,3 Hz alors que le spectre S21 ne comprend qu'une raie (à 0,7 Hz) dans la zone de détection non ambiguë. Le deuxième bloc 8 calcule alors, pour chacune de ces quatre fréquences du spectre d'intersection, les fréquences qui devraient apparaître dans les spectres S21, S31 et S51 en appliquant la formule 1 ci-dessus, puis détermine quelles fréquences d'intersection expliquent l'apparition de toutes les raies des spectres S21, S31 et S51 réellement obtenues. Ici on trouve que les deux paires de fréquences à 1,3 Hz et 5,3 Hz, et 4,7 Hz et 11,3 Hz satisfont seules à cette exigence. Il suffit alors d'une information provenant d'une autre source pour certifier une de ces fréquences ou l'écarter et de choisir le bon groupe de fréquences vibratoires.

Dans le cas de la figure 2, où chacun des spectres S2, S3 et S5 compte cinq raies dans la bande de détection sans ambiguïté, autant que de raies dans la bande limitée par la formule (2) dans le spectre d'intersection S0, le deuxième bloc 8 n'a pas à faire le travail explicité ci-dessus.

Les deux autres blocs 9 et 10 sont utilisables pour des essais à régime variable de rotation du rotor 3. Le troisième bloc 9 est utilisé pour distinguer, pour chaque réseau de capteurs A, B et C, les raies dont la variation de fréquence est incompatible avec celles du régime du moteur et les élimine ; les autres raies sont de véritables fréquences vibratoires des aubes 2, puisqu'elles correspondent au cas k=0 de la formule 1. Le troisième bloc 9 écarte donc ces raies associées à des fréquences trop rapidement variables après que plusieurs spectres ont été pris pour des vitesses de rotation en évolution.

Le quatrième bloc 10 est utile pour certaines situations où des fréquences propres ont un écart tel qu'il correspond à certains multiples de la fréquence de rotation Fr qui font alors apparaître subitement des raies supplémentaires communes à tous les spectres expérimentaux ; mais comme ces raies communes disparaissent dès que la fréquence de rotation change, leur détection est facile, et le quatrième bloc 10 est chargé de les repérer en vérifiant si les spectres successifs ont le même nombre de raies, et en écartant les raies surnuméraires qui n'ont pas d'homologue sur d'autres spectres du même réseau.

Le procédé implique donc, dans sa réalisation la meilleure, l'emploi préalable du premier bloc 7, qui donne les fréquences d'intersection des spectres expérimentaux ; puis le deuxième bloc 8 détermine si toutes les fréquences d'intersection sont bien des fréquences propres en appliquant le critère donné plus haut, et dans la négative, il détermine les solutions possibles ; si l'essai est à rotation à vitesse variable, le troisème bloc 9 est utilisé seul ou après le premier bloc 7 et le quatrième bloc 10 après le premier bloc 7.

## Revendications

1. Procédé de mesure de fréquences de vibration de portions (2) d'un corps (3) tournant en utilisant des détecteurs (C1 à C8) disposés autour du corps tournant et devant lesquels les portions passent, en convertissant des mesures des détecteurs en spectres fréquentiels, **caractérisé en ce que** les détecteurs sont répartis régulièrement angulairement dans chaque réseau en plusieurs réseaux (A, B, C) ayant des nombres différents, notamment des nombres premiers entre eux, des détecteurs, tous les détecteurs d'un réseau n'appartenant pas à un autre réseau ayant un nombre supérieur de détecteurs, un spectre est obtenu pour chacun des réseaux, et **en ce que** des comparaisons des spectres des réseaux sont faites pour sélectionner des raies des spectres et considérer comme les fréquences de vibration les fréquences des raies sélectionnées.

2. Procédé de mesure de fréquences de vibration selon la revendication 1, **caractérisé en ce qu'**il comprend une sélection des raies (7) qui sont communes à tous les spectres des différents réseaux.

3. Procédé de mesure de fréquences de vibration selon la revendication 2, **caractérisé en ce qu'**il comprend une comparaison (8) entre le nombre des raies qui sont communes à tous les spectres des différents réseaux jusqu'à une fréquence égale à [ppcm(Ni)].Fr/2, où Fr est la fréquence de rotation du corps tournant et ppcm(Ni) le plus petit commun multiple des nombres Ni des capteurs de tous les réseaux, et les nombres des raies présentes dans chacun des réseaux jusqu'à une fréquence respectivement égale à Ni.Fr/2.

4. Procédé de mesure de fréquences de vibration selon la revendication 3, **caractérisé en ce qu'**il comprend, si le nombre desdites raies qui sont communes à tous les spectres des différents réseaux jusqu'à la fréquence égale à [ppcm(Ni)].Fr/2 ne coïncide pas avec le nombre des raies d'au moins un des réseaux jusqu'à la fréquence respectivement égale à Ni.Fr/2, une recherche de groupes desdites fréquences communes qui permettent d'expliquer l'apparition des raies présentes dans chacun des spectres.

5. Procédé de mesure de fréquences de vibration selon l'une quelconque des revendications 1 à 4, **caractérisé en ce qu'**il comprend une variation de fréquence de rotation du corps tournant et une sélection des raies (9) en écartant des raies de fréquence variable de façon incompatible avec les variations de la vitesse de rotation du corps tournant.

6. Procédé de mesure de fréquences de vibration selon l'une quelconque revendications 1 à 5, **caractérisé en ce qu'**il comprend une variation de fréquence de rotation du corps tournant et une élimination de raies (10) qui n'apparaissent qu'à une fréquence de rotation particulière du corps tournant.

7. Procédé de mesure de fréquences de vibration selon l'une quelconque des revendications 1 à 6, **caractérisé en ce que** les réseaux de détecteurs ont un détecteur commun (C1).

## Patentansprüche

1. Verfahren zur Messung von Vibrationsfrequenzen von Teilen (2) eines rotierenden Körpers (3) unter Verwendung von Sensoren (C1 bis C8), die um den rotierenden Körper (3) herum angebracht sind und an denen die Teile (2) vorbei laufen, indem Messungen der Sensoren in Frequenzspektren umgewandelt werden,
**dadurch gekennzeichnet,**
**dass** die Sensoren in mehreren Netzen (A, B, C) mit unterschiedlichen Anzahlen von Sensoren, die insbesondere Primzahlen sind, angeordnet sind, und zwar in jedem Netz in gleichmäßigen Winkelabständen - wobei alle Sensoren eines Netzes nicht Teil eines anderen Netzes mit einer höheren Anzahl von Sensoren sind -, für jedes der Netze ein Spektrum erzielt wird und dass die Spektren der Netze verglichen werden, um Linien der Spektren auszuwählen und die Frequenzen der ausgewählten Linien als die Vibrationsfrequenzen zu betrachten.

2. Verfahren zur Messung von Vibrationsfrequenzen nach Anspruch 1,
**dadurch gekennzeichnet,**
**dass** es das Auswählen der Linien (7) der verschiedenen Netze beinhaltet, die allen Spektren gemeinsam sind.

3. Verfahren zur Messung von Vibrationsfrequenzen nach Anspruch 2,
**dadurch gekennzeichnet,**
**dass** es einen Vergleich (8) zwischen der Anzahl der allen Spektren der verschiedenen Netze gemeinsamen Linien bis zu einer Frequenz von [ppcm (Ni)]·Fr/2, wobei Fr die Drehfrequenz des rotierenden Körpers und ppcm (Ni) das kleinste gemeinsame Vielfache der Anzahlen Ni der Sensoren aller Netze ist, und den Anzahlen der in jedem Netz vorhandenen Linien bis zu einer Frequenz von Ni · Fr/2 beinhaltet.

4. Verfahren zur Messung von Vibrationsfrequenzen nach Anspruch 3,
**dadurch gekennzeichnet,**
**dass** es für den Fall, wenn die Anzahl dieser allen Spektren der verschiedenen Netze gemeinsamen Linien bis zu einer Frequenz von [ppcm (Ni)]·Fr/2 nicht mit der Anzahl der Linien in wenigstens einem der Netze bis zu der jeweiligen Frequenz von Ni · Fr/2 übereinstimmt, eine Suche nach Gruppen dieser gemeinsamen Frequenzen beinhaltet, mit denen das Auftreten der Linien in jedem der Spektren erklärt werden kann.

5. Verfahren zur Messung von Vibrationsfrequenzen nach einem der Ansprüche 1 bis 4,
**dadurch gekennzeichnet,**
**dass** es ein Verändern der Drehfrequenz des rotierenden Körpers und ein Auswählen der Linien (9) beinhaltet, indem Linien einer Frequenz, deren Änderung mit den Änderungen der Drehgeschwindigkeit des rotierenden Körpers unvereinbar ist, ausgesondert werden.

6. Verfahren zur Messung von Vibrationsfrequenzen nach einem der Ansprüche 1 bis 5,
**dadurch gekennzeichnet,**
**dass** es ein Verändern der Drehfrequenz des rotierenden Körpers und ein Eliminieren von Linien (10) beinhaltet, die nur bei einer besonderen Drehfrequenz des rotierenden Körpers auftreten.

7. Verfahren zur Messung von Vibrationsfrequenzen nach einem der Ansprüche 1 bis 6,
**dadurch gekennzeichnet,**
**dass** die Sensornetze einen gemeinsamen Sensor (C1) haben.

## Claims

1. Method of measuring vibration frequencies of portions (2) of a rotating body (3) using detectors (C1 to C8) arranged around the rotating body and past which the portions travel, by converting measurements of the detectors into frequency spectra, **characterized in that** the detectors are distributed regularly angularly in each array as several arrays (A, B, C) having different numbers, in particular relatively prime numbers, of detectors, all the detectors of an array not belonging to another array having a larger number of detectors, a spectrum is obtained for each of the arrays, and **in that** comparisons of the spectra of the arrays are made so as to select spectral lines and to regard the frequencies of the selected lines as being the vibration frequencies.

2. Method of measuring vibration frequencies according to Claim 1, **characterized in that** it comprises a selection of the spectral lines (7) which are common to all the spectra of the various arrays.

3. Method of measuring vibration frequencies according to Claim 2, **characterized in that** it comprises a comparison (8) between the number of spectral lines which are common to all the spectra of the various arrays up to a frequency equal to [ppcm(Ni)].Fr/2, where Fr is the frequency of rotation of the rotating body and ppcm(Ni) the lowest common multiple of the numbers Ni of sensors of all the arrays, and the numbers of spectral lines present in each of the arrays up to a frequency respectively equal to Ni.Fr/2.

4. Method of measuring vibration frequencies according to Claim 3, **characterized in that** it comprises, if the number of the said spectral lines which are common to all the spectra of the various arrays up to a frequency equal to [ppcm(Ni)].Fr/2 does not coincide with the number of spectral lines of at least one of the arrays up to the frequency respectively equal to Ni.Fr/2, a search for groups of the said common frequencies which make it possible to explain the appearance of the spectral lines present in each of the spectra.

5. Method of measuring vibration frequencies according to any one of Claims 1 to 4, **characterized in that** it comprises a variation of frequency of rotation of the rotating body and a selection of the spectral lines (9), discarding spectral lines of frequency varying incompatibly with the variations in the speed of rotation of the rotating body.

6. Method of measuring vibration frequencies according to any one of Claims 1 to 5, **characterized in that** it comprises a variation of frequency of rotation of the rotating body and an elimination of spectral lines (10) which appear at only a particular frequency of rotation of the rotating body.

7. Method of measuring vibration frequencies according to any one of Claims 1 to 6, **characterized in that** the arrays of detectors have a common detector (C1).
